# EUROPEAN PATENT APPLICATION

(11) **EP 3 136 250 A1**
(43) Date of publication of application: **01.03.2017**
(21) Application number: 15847354.6
(22) Date of filing: 17.09.2015
(51) Int. Cl.: G06F 13/00, H04L 12/70

(54) **NETWORK SYSTEM AND COMMUNICATION METHOD**

(30) Priority: 30.09.2014 JP 2014200036
(71) Applicant: Seiko Epson Corporation, Tokyo 160-8801 (JP)
(72) Inventor: TSUTSUMI, Koichiro, Suwa-shi Nagano 392-8502 (JP)
(74) Representative: MERH-IP Matias Erny Reichl Hoffmann Patentanwälte PartG mbB
(86) International application number: PCT/JP2015/004746
(87) International publication number: WO 2016/051705

(57) **Abstract**

A network system in which a terminal device and a server communicate through a global network enables executing an appropriate process when these devices cannot communicate through the global network.

A tablet terminal accesses a recording control device through a local area network; the recording control device determines if communication with a control server is possible through a global network, instructs connecting to the control server if communication is possible, and instructs connecting to the recording control device if communication is not possible; and the tablet terminal, as instructed, connects to the control server and controls the recording device by a web application that runs on the control server, or connects to the recording control device and controls the recording device by a web application that runs on the recording control device.

## Description

### [Technical Field]

The present invention relates to a network system and a communication method.

### [Background]

Systems (application execution systems) in which a terminal device (POS terminal) and a server (POS server) communicate through a global network are known from the literature (see, for example, PTL 1). In the system described in PTL 1, the terminal device controls a recording device (printing device) through an application that runs on the server.

### [Citation List]

### [Patent Literature]

[PTL 1] JP-A-2014-6629

### [Summary of Invention]

### [Technical Problem]

In a system such as described in PTL 1 in which a terminal device communicates with a server over a network, and controls a recording device by an application that runs on the server, the system must be able to execute a process for handling events in which the terminal device and server cannot communicate through the global network.

An objective of the present invention is to provide a network system in which a terminal device and server communicate through a global network, and can execute a process for handling situations in which the terminal device and server cannot communicate through the global network.

### [Solution to Problem]

To achieve the foregoing object, a network system according to at least one embodiment of the invention includes: a server configured to connect to a global network; a terminal device configured to communicate with the server through the global network, and control a recording device that records on recording media; and a control device configured to communicate with the terminal device through a local area network, and communicate with the server through the global network; the terminal device accessing the control device through the local area network; the control device determining in response to access from the terminal device if the control device can communicate with the server through the global network, instructing the terminal device to connect to the server if the control device can communicate with the server, and instructing the terminal device to connect to the control device if the control device cannot communicate with the server; and the terminal device connecting to the server and controlling the recording device by a first application that runs on the server if instructed by the control device to connect to the server, and connecting to the control device and controlling the recording device by a second application that runs on the control device if instructed by the control device to connect to the control device.

Thus comprised, a network system in which a terminal device and a server communicate through a global network can execute a process appropriate to situations in which the devices are unable to communicate through the global network.

The network system of at least one embodiment of the invention is further characterized by the terminal device accessing the control device through the local area network when the terminal device starts.

This configuration improves user convenience.

The network system of at least one embodiment of the invention is further characterized by the control device being a device with a function for recording on a recording medium.

Thus comprised, there is no need to provide a dedicated device to substitute for the server on the local area network.

The network system of at least one embodiment of the invention is further characterized by the terminal device executing a transaction process by the first application or the second application, and controlling the recording device based on the transaction process to produce a receipt on which transaction-related information is recorded.

Thus comprised, a system in which a recording device produces receipts as controlled by a terminal device can execute a process appropriate to when the terminal device and the server cannot communicate through the global network.

To achieve the foregoing objective, a communication method according to at least one embodiment of the invention includes: a terminal device accessing upon startup a control device through a local area network; the control device determining in response to access from the terminal device if the control device can communicate with a server through a global network, instructing the terminal device to connect to the server if the control device can communicate with the server, and instructing the terminal device to connect to the control device if the control device cannot communicate with the server; and the terminal device connecting to the server and controlling a recording device by a first application that runs on the server if instructed by the control device to connect to the server, and connecting to the control device and controlling the recording device by a second application that runs on the control device if instructed by the control device to connect to the control device.

Thus comprised, a network system in which a terminal device and a server communicate through a global network can execute a process appropriate to situations in which the devices are unable to communicate through the global network.

The communication method of at least one embodiment of the invention is further characterized by the terminal device accessing the control device through the local area network when the terminal device starts.

This configuration improves user convenience.

The communication method of at least one embodiment of the invention is further characterized by the control device being a device with a function for recording on a recording medium.

Thus comprised, there is no need to provide a dedicated device to substitute for the server on the local area network.

The communication method of at least one embodiment of the invention is further characterized by the terminal device executing a transaction process by the first application or the second application, and controlling the recording device based on the transaction process to produce a receipt on which transaction-related information is recorded.

Thus comprised, a network system in which a terminal device and a server communicate through a global network can execute a process appropriate to situations in which the devices are unable to communicate through the global network.

### [Advantageous Effects of Invention]

In a network system according to at least one embodiment of the invention in which a control device, a terminal device, and a server communicate through a global network, because the control device communicates with the terminal device through a local area network and executes an appropriate process instead of the server when the control device and server cannot communicate through the global network, the terminal device can continue processing without interruption even when the control device and the server cannot communicate.

### [Brief Description of Drawings]

FIG. 1 illustrates the configuration of a transaction processing system.
FIG. 2 is a block diagram illustrating the functional configuration of devices in the transaction processing system.
FIG. 3 is a flow chart of the operation of devices in the transaction processing system.
FIG. 4 illustrates an example of a user interface.
FIG. 5 is a flowchart of the operation of devices in the transaction processing system.
FIG. 6 is a flow chart of the operation of devices in the transaction processing system.

### [Description of Embodiments]

Embodiments of the invention are described below with reference to the accompanying figures.

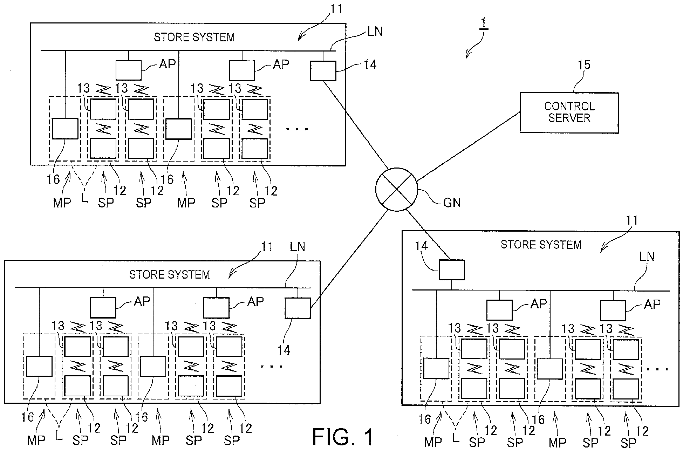

FIG. 1 illustrates the configuration of a transaction processing system 1 (network system) according to an embodiment of the invention.

As shown in FIG. 1, the transaction processing system 1 includes multiple store systems 11. A store system 11 is a system used in supermarkets, convenience stores, department stores, restaurants, and other retail businesses.

Each store system 11 can process transactions based on products purchased by customers, and can produce receipts for the transactions.

Checkout counters L where customer transactions are processed are disposed in a store where the store system 11 is deployed. A main POS terminal MP which can produce transaction receipts, or a satellite POS terminal SP, is installed at each checkout counter L.

Amain POS terminal MP has a recording control device 16 (control device). A recording control device 16 has functions for executing a transaction process based on the transaction performed at the checkout counter L, and producing a receipt recording information related to the transaction. Under specific circumstances, the main POS terminal MP also functions as a server to a tablet terminal 13 (described below) as a client.

The configuration, function, and processes based on the functions of the main POS terminal MP are described further below.

A satellite POS terminal SP has a recording device 12 and a tablet terminal 13 (terminal device) that connect to and communicate wirelessly with the recording device 12.

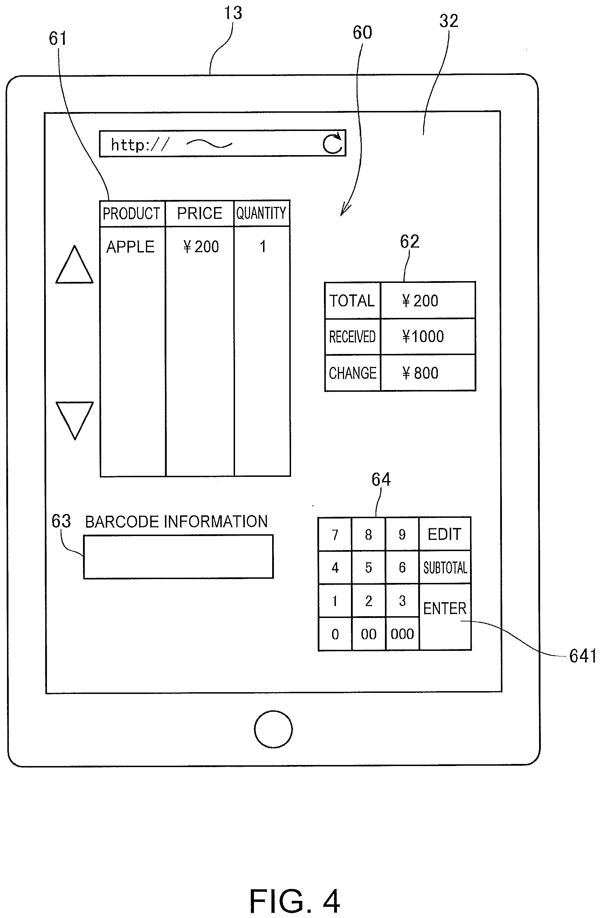

The tablet terminal 13 is a tablet (flat panel) computer having a touch panel 32 on the front (see FIG. 4).

The tablet terminal 13 provides a specific user interface to the checkout clerk when processing a transaction at the checkout counter L. The checkout clerk inputs transaction information to the user interface, and references transaction-related information that is displayed in the user interface. The tablet terminal 13 controls the recording device 12 to produce a receipt appropriately to the transaction completed at the checkout counter L. The receipt produced by the recording device 12 is then given to the customer.

The configuration, function, and processes based on the functions of the satellite POS terminal SP are described further below.

The store system 11 has a local area network LN.

The recording control device 16 of the main POS terminal MP connects by wire to the local area network LN according to a communication protocol appropriate to a wired LAN.

The tablet terminal 13 of the satellite POS terminal SP connects to the local area network LN according to a specific communication protocol for a wireless LAN. As described below, one or more access points AP are also connected to the local area network LN. The tablet terminal 13 accesses the local area network LN by communicating wirelessly with an access point AP according to a specific communication protocol for a wireless LAN.

A communication device 14 is also connected to the local area network LN. The communication device 14 is an interface device that connects the local area network LN to a global network GN (network) such as the Internet. The communication device 14 has the functions of a modem (or ONU (Optical Network Unit)), a router, a DHCP (Dynamic Host Configuration Protocol) server, and a NAT (Network Address Translation) unit. The communication device 14 passes data between devices when a device connected to the local area network LN and a device connected to the global network GN communicate with each other. Note that the communication device 14 is represented by a single function block in FIG. 1, but the communication device 14 may comprise plural devices with specific functions.

The recording control device 16 and tablet terminal 13 can also access the global network GN through the communication device 14.

A control server 15 connects to the global network GN. The control server 15 is a cloud server in a cloud system in which the recording control device 16 and tablet terminal 13 are clients. More specifically, when triggered by a request from a client device, for example, the control server 15 runs a specific operating process and sends data based on the result of the process to the client. Note that the control server 15 is represented by a single function block in FIG. 1, but this does not mean that the control server 15 is embodied by a single server device. For example, the control server 15 may include a plurality of server devices. More specifically, the control server 15 may be any configuration that can execute the processes described below.

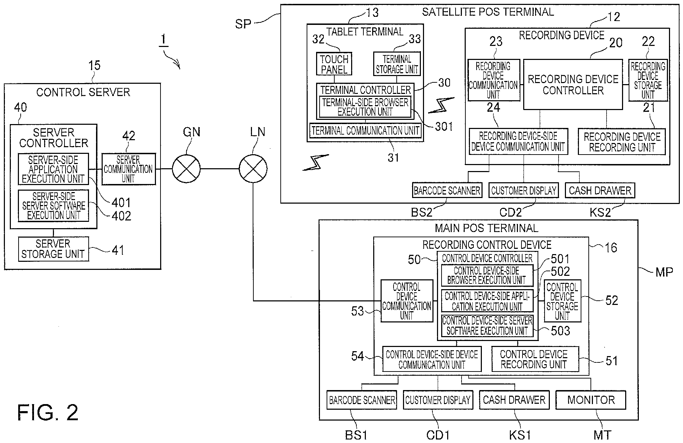

FIG. 2 is a block diagram illustrating the functional configuration of the recording control device 16, recording device 12, tablet terminal 13, and control server 15 in the transaction processing system 1.

The recording control device 16 is a thermal line printer that stores roll paper (recording medium) and records images by forming dots with a thermal line head on the roll paper.

In specific circumstances as described below, the recording control device 16 functions instead of the control server 15 as a server of which the tablet terminal 13 is a client, and executes processes in response to requests from the tablet terminal 13.

As shown in FIG. 2, the recording control device 16 has a control device controller 20 (control unit), a print unit 21, a control device storage unit 22, a control device communication unit 23 (communication unit), and a control device-side device communication unit 24.

As shown in FIG. 2, the recording control device 16 has a control device controller 50, a control device recording unit 51(a control device recorder 51), a control device storage unit 52 (a control device storage 52), a control device communication unit 53 (a control device communicator 53), and a control device-side device communication unit 54(a control device-side device communicator 54).

The control device controller 50 has a CPU, ROM, RAM, and other peripheral circuits, and controls the recording control device 16.

A specific web browser is installed on the recording control device 16. The control device controller 50 functions as a control device-side browser execution unit 501 (a control device-side browser executor 501) by reading and running the installed web browser.

A specific web application (second application) is also installed on the recording control device 16. The control device controller 50 also functions as a control device-side application execution unit 502(a control device-side application executor 502) by reading and running the installed web application.

Specific web server software is also installed on the recording control device 16. The control device controller 50 also functions as a control device-side server software execution unit 503 (a control device-side server software executor 503) by reading and running the installed web server software.

The functions of the function blocks of the control device controller 50, and processes based on those functions, are described further below.

The control device recording unit 51 includes mechanisms related to recording on roll paper, such as a conveyance mechanism for conveying roll paper stored in the cabinet of the recording control device 16, a recording mechanism for forming dots and recording images on the roll paper with a thermal head, and a cutter mechanism for cutting the roll paper at a specific position. The control device recording unit 51 conveys the roll paper with the conveyance mechanism, records receipt-related images on the roll paper with the recording mechanism, and cuts the roll paper at a specific position with the cutter mechanism as controlled by the control device controller 50 to produce a receipt.

The control device storage unit 52 has nonvolatile memory such as an EEPROM device, and stores data.

The control device storage unit 52 stores a product master database relationally storing product code and product price information for products. The product master database stored by the control device storage unit 52, and the product master database stored by the server storage unit 41 of the control server 15 described below, are synchronized by a specific means to maintain identical content.

The control device communication unit 53 accesses the local area network LN and communicates with other devices (such as a tablet terminal 13) connected to the network as controlled by the control device controller 50.

The control device communication unit 53 also accesses the global network GN through the communication device 14 and communicates with other devices (such as the control server 15) connected to the network as controlled by the control device controller 50.

The control device-side device communication unit 54 has an interface board with a USB port, a port conforming to a non-USB serial communication standard, or ports conforming to other communication protocols. Devices can connect to the ports. The control device-side device communication unit 54 communicates with devices connected to the recording control device 16 through a port as controlled by the control device controller 50.

Note that the control device-side device communication unit 54 may also be configured with a wireless communication capability and communicate with devices wirelessly.

A barcode scanner BS1, customer display CD1, cash drawer KS1, and monitor MT are devices connected to the recording control device 16.

The barcode scanner BS1 is used to read barcodes from products and product packaging, and outputs data representing the barcode to the control device-side device communication unit 54. The control device-side device communication unit 54 then outputs the data input from the barcode scanner BS1 to the control device controller 50.

The customer display CD1 displays text, symbols, and images as controlled by the control device controller 50. The information presented on the customer display CD1 can be read by the checkout clerk performing the transaction at the checkout counter L.

The cash drawer KS1 has a tray for storing cash, and a mechanism for locking the tray, and unlocks and opens the tray as controlled by the control device controller 50.

The monitor MT has a display device such as an LCD panel or OLED panel, and displays images as controlled by the control device controller 50. The control device-side browser execution unit 501 of the control device controller 50 can display a web page on the monitor MT.

The recording device 12 is a thermal line printer.

As shown in FIG. 2, the recording device 12 has a recording device controller 20, a recording device recording unit 21 (a recording device recorder 21), a recording device storage unit 22(a recording device storage 22), a recording device communication unit 23(a recording device communicator 23), and a recording device-side device communication unit 24 (a recording device-side device communicator 24).

The recording device controller 20 has a CPU, ROM, RAM, and other peripheral circuits not shown, and controls the recording device 12.

The recording device recording unit 21 includes mechanisms related to recording on roll paper, such as a conveyance mechanism for conveying roll paper stored inside the cabinet of the recording device 12, a recording mechanism for forming dots and recording images on the roll paper with a thermal head, and a cutter mechanism for cutting the roll paper at a specific position. The recording device recording unit 21 conveys the roll paper with the conveyance mechanism, records receipt-related images on the roll paper with the recording mechanism, and cuts the roll paper at a specific position with the cutter mechanism as controlled by the recording device controller 20 to produce a receipt.

The recording device storage unit 22 has nonvolatile memory such as an EEPROM device, and stores data.

The recording device communication unit 23 communicates with the tablet terminal 13 in a wireless LAN infrastructure mode through the local area network LN as controlled by the recording device controller 20. Wireless communication between the recording device 12 and tablet terminal 13 is not limited to the foregoing, and may be by direct communication between devices in a wireless LAN ad hoc mode, or by direct communication between devices using a near-field communication protocol such as Bluetooth (R).

The recording device-side device communication unit 24 communicates with devices connected to the recording device 12 as controlled by the recording device controller 20.

A barcode scanner BS2, customer display CD2, and cash drawer KS2 are devices connected to the recording device 12.

As shown in FIG. 2, the tablet terminal 13 has a terminal controller 30, a terminal communication unit 31 (a terminal communicator 31), a touch panel 32, and a terminal storage unit 33 (a terminal storage 33).

The terminal controller 30 has a CPU, ROM, RAM, and other peripheral circuits not shown, and controls the tablet terminal 13.

A specific web browser is installed on the tablet terminal 13. The terminal controller 30 functions as a terminal-side browser execution unit 301(a terminal-side browser executor 301) by reading and running the installed web browser.

The terminal communication unit 31 communicates with the recording device 12 through the local area network LN as controlled by the terminal controller 30.

The terminal communication unit 31 communicates through the communication device 14 with devices (including the control server 15) connected to the global network GN as controlled by the terminal controller 30.

The touch panel 32 has a display device such as an LCD panel and a touch sensor disposed over the LCD panel. The display panel displays images as controlled by the terminal controller 30. The touch sensor detects touch operations and outputs to the terminal controller 30.

The terminal storage unit 33 has an EEPROM device or other type of nonvolatile memory, and stores data.

As shown in FIG. 2, the control server 15 has a server controller 40, a server storage unit 41(a server storage 41), and a server communication unit 42(a server communicator 42).

The server controller 40 has a CPU, ROM, RAM, and other peripheral circuits not shown, and controls the control server 15.

A specific web application (first application) is installed on the control server 15. The server controller 40 functions as a server-side application execution unit 401 (a server-side application executor 401) by reading and running the installed web application.

Specific web server software is installed on the control server 15. The server controller 40 functions as a server-side server software execution unit 402(a server-side server software executor 402) by reading and running the installed web server software.

The server storage unit 41 comprises nonvolatile memory such as a hard disk drive or EEPROM device, and stores data. The server storage unit 41 stores a product master database relating product code and product price information for products. Other data stored by the server storage unit 41 is described further below.

The server communication unit 42 accesses the global network GN and communicates with devices connected to the network (such as the recording control device 16 and tablet terminal 13) as controlled by the server controller 40.

The terminal-side browser execution unit 301 of the tablet terminal 13 acquires and downloads a specific HTML file from the control server 15. The terminal-side browser execution unit 301 then controls the recording device 12 by functions of the HTML file that was downloaded. Control of the recording device 12 based on functions of the HTML file is described below.

The tablet terminal 13 and the control server 15 may not be able to communicate with each other due, for example, to communication errors related to the global network GN or problems with the control server 15. If the tablet terminal 13 is unable to acquire the HTML file, it cannot control the recording device 12, cannot perform tasks using the store system 11 in the store, and may therefore inconvenience customers.

Devices in this transaction processing system 1 therefore execute the following process related to the tablet terminal 13 acquiring the HTML file.

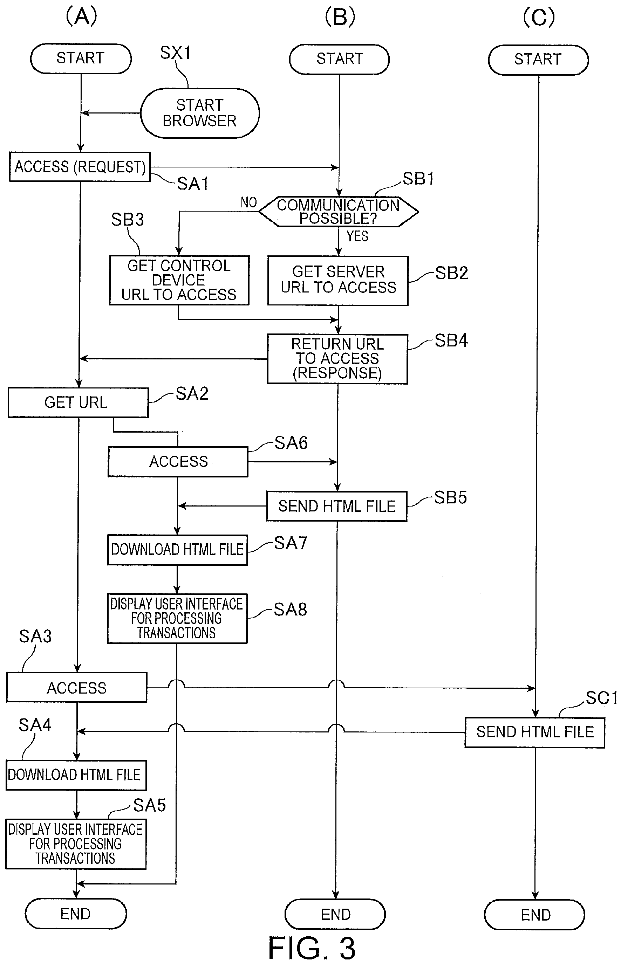

FIG. 3 is a flow chart of the operation of devices in the transaction processing system 1 related to the tablet terminal 13 acquiring an HTML file. Column (A) shows the operation of the tablet terminal 13, (B) shows the operation of the recording control device 16, and (C) shows the operation of the control server 15.

When the process of the flow chart shown in FIG. 3 starts, the power of the recording control device 16 is on, and the web application and web server software installed on the recording control device 16 are running.

As shown in FIG. 3 (A), the checkout clerk running the cash register at the checkout counter L turns on the power of the tablet terminal 13 installed at the checkout counter L and starts the browser (step SX1). The checkout clerk turns the tablet terminal 13 on and starts the browser at a specific time before a transaction starts at the checkout counter L, such as when the store opens.

When the browser starts, the terminal-side browser execution unit 301 of the terminal controller 30 of the tablet terminal 13 sends an HTTP request of a specific URL on the recording control device 16 (referred to below as the access-on-start URL) (step SA1). This access-on-start URL is previously registered and recorded in data that can be referenced by the terminal-side browser execution unit 301. The tablet terminal 13 in this embodiment thus accesses the recording control device 16 on the local area network LN when the browser starts instead of accessing the control server 15 on the global network GN. The effect of this is described further below.

As shown in FIG. 3 (B), the control device-side server software execution unit 503 of the control device controller 50 of the recording control device 16 determines if communication with the control server 15 through the global network GN is possible (step SB1). Software installed on the recording control device 16 has functionality for intermittently polling the control server 15 for a response, and monitoring if communication with the control server 15 is possible based on the response to the request. In step SB1 the control device-side server software execution unit 503 determines if communication with the control server 15 is possible by a function of such software. Note that the process of step SB1 is not limited to this method, and may use any appropriate method.

If communication with the control server 15 is possible (step SB1: YES), the control device-side server software execution unit 503 acquires a specific URL on the control server 15 (referred to below as the server URL to access) as the URL for the tablet terminal 13 to access to acquire the HTML file (step SB2) . The server URL to access is previously registered, and is recorded in data the control device-side server software execution unit 503 can access.

If communication with the control server 15 is not possible (step SB1: NO), the control device-side server software execution unit 503 acquires a specific URL on the recording control device 16 (referred to below as the control device URL to access) as the URL for the tablet terminal 13 to access to acquire the HTML file (step SB3) . The control device URL to access is previously registered, and is recorded in data the control device-side server software execution unit 503 can access.

Note that being unable to communicate includes when a communication delay exceeding a timeout period occurs, and when communication is unstable for a period exceeding a timeout period.

Next, the control device-side server software execution unit 503 returns the server URL to access acquired in step SB2, or the control device URL to access acquired in step SB3, to the tablet terminal 13 as a redirect by an HTTP response (step SB4).

As shown in FIG. 3 (A), the terminal-side browser execution unit 301 of the terminal controller 30 of the tablet terminal 13 thus acquires the URL that was returned (the URL to access to acquire the HTML file) (step SA2).

The terminal-side browser execution unit 301 goes to step SA3 if the URL acquired in step SA2 is the server URL to access, and goes to step SA6 if the acquired URL is the control device URL to access.

In step SA3, the terminal-side browser execution unit 301 accesses the control server 15 by HTTP by accessing the server URL to access acquired in step SA2 (step SA3).

In response to being accessed by the tablet terminal 13, the server-side server software execution unit 402 of the server controller 40 of the control server 15 sends the specific HTML file (referred to below as the server-side HTML file) acquired from the accessed URL to the tablet terminal 13 as shown in FIG. 3 (C) (step SC1).

As shown in FIG. 3 (A), the terminal-side browser execution unit 301 of the terminal controller 30 of the tablet terminal 13 acquires and downloads the server-side HTML file sent by the control server 15 (step SA4).

A program with functionality for executing transaction-related processes in conjunction with the server-side application execution unit 401 of the server controller 40 of the control server 15 is embedded in a specific scripting language in the server-side HTML file. Thereafter, the function of the terminal-side browser execution unit 301 of the terminal controller 30 of the tablet terminal 13 is embodied by a program written in the specific scripting language that runs on a browser, and a web application of the control server 15.

Next, the terminal-side browser execution unit 301 executes the HTML file and displays the user interface for processing transactions 60 (FIG. 4) on the touch panel 32 (step SA5) . The user interface for processing transactions 60 is described further below.

In step SA6, the terminal-side browser execution unit 301 of the terminal controller 30 of the tablet terminal 13 accesses the recording control device 16 by HTTP using the control device URL to access acquired in step SA3 (step SA6).

As shown in FIG. 3 (B), in response to access from the tablet terminal 13, the control device-side server software execution unit 503 of the control device controller 50 of the recording control device 16 sends the specific HTML file (below, the control device-side HTML file) from the accessed URL to the tablet terminal 13 (step SB5).

As shown in FIG. 3 (A), the terminal-side browser execution unit 301 of the terminal controller 30 of the tablet terminal 13 acquires and downloads the control device URL to access sent by the recording control device 16 (step SA7).

A program with functionality for executing transaction-related processes in conjunction with the control device-side application execution unit 502 of the control device controller 50 of the recording control device 16 is embedded in a specific scripting language in the control device-side HTML file. Thereafter, the function of the terminal-side browser execution unit 301 of the terminal controller 30 of the tablet terminal 13 is embodied by a program written in the specific scripting language that runs on a browser, and a web application of the recording control device 16.

Next, the terminal-side browser execution unit 301 executes the HTML file and displays the user interface for processing transactions 60 (FIG. 4) on the touch panel 32 (step SA8). The user interface for processing transactions 60 is described further below.

The server-side HTML file stored by the control server 15 and the control device-side HTML file stored by the recording control device 16 are synchronized by a specific means to maintain the same content. More specifically, the user can change the content of the server-side HTML file on the control server 15 by a specific means. When the content of the server-side HTML file is changed, the control server 15 accesses each recording control device 16 in each store system 11, and based on the updated server-side HTML file, updates the control device-side HTML file on each recording control device 16.

Because the same content is maintained in the server-side HTML file and the control device-side HTML file by this method, if the user changes the content of the server-side HTML file, the changes to the HTML file are reflected in the control device-side HTML file on the recording control device 16, and maintenance is simple.

As described above, when the browser boots in this embodiment of the invention, the terminal-side browser execution unit 301 of the terminal controller 30 of the tablet terminal 13 first accesses the recording control device 16 through the local area network LN. In response to being accessed, the recording control device 16 determines if communication is possible with the control server 15. If the recording control device 16 and control server 15 can communicate, the status of the global network GN and the status of the control server 15 are normal, and the tablet terminal 13 can also communicate through the global network GN with the control server 15.

If the recording control device 16 can communicate with the control server 15, the recording control device 16 sends to the tablet terminal 13 the specific URL on the control server 15 as the URL to access to acquire the HTML file. If the recording control device 16 cannot communicate with the control server 15, the recording control device 16 sends to the tablet terminal 13 a specific URL of its own (on the recording control device 16) as the URL to access to acquire the HTML file. The tablet terminal 13 then acquires the HTML file by accessing the URL that was reported.

As a result, when communication is possible with the control server 15, the terminal-side browser execution unit 301 of the terminal controller 30 of the tablet terminal 13 cooperates with the server-side application execution unit 401 of the server controller 40 of the control server 15 to execute the transaction process and related processes. If communication with the control server 15 is not possible, the terminal-side browser execution unit 301 of the terminal controller 30 of the tablet terminal 13 cooperates with the control device-side application execution unit 502 of the control device controller 50 of the recording control device 16 to execute the transaction process and related processes.

The processor capacity of the control server 15 is greater than the recording control device 16. Because the recording control device 16 executes a process for producing a receipt based on a transaction, minimizing the increase in the processor load when the recording control device 16 functions as a server is necessary.

By executing the process described above, processes can be executed with high processor efficiency by cooperation of the tablet terminal 13 and control server 15 without increasing the processor load on the recording control device 16 when the tablet terminal 13 and control server 15 can communicate with each other.

When the tablet terminal 13 and control server 15 cannot communicate with each other, the processor load on the recording control device 16 increases but interruption of business operations in the store can be prevented by the tablet terminal 13 and recording control device 16 working together to execute the processes.

The operation of devices in the transaction processing system 1 during a transaction at a checkout counter L where a satellite POS terminal SP is installed is described next.

Processing by the devices when the tablet terminal 13 acquires the server-side HTML file from the control server 15, and executes transaction-related processes in conjunction with the control server 15, is described in the example below.

FIG. 4 shows an example of a user interface for processing transactions 60 that is displayed on the touch panel 32.

A list display area 61 where the names of the products (product names) being purchased by the customer, the prices of the products, and the quantities of the products are presented in a list is displayed at the top left of the user interface for processing transactions 60 in FIG. 4. To the right of this list display area 61 is presented an amount display area 62 where the total amount of the products being purchased by the customer, the amount of money received from the customer in the transaction, and the amount of change due to the customer are displayed.

Information (referred to below as barcode information) expressed by the barcodes that are read by the barcode scanner BS1, BS2 of the recording device 12 is displayed in the barcode information display area 63 below the list display area 61. The barcode information is basically the product code assigned to the product.

A virtual keypad 64 is displayed on the right side of the barcode information display area 63. The virtual keypad 64 includes an Enter key 641 for finalizing a transaction.

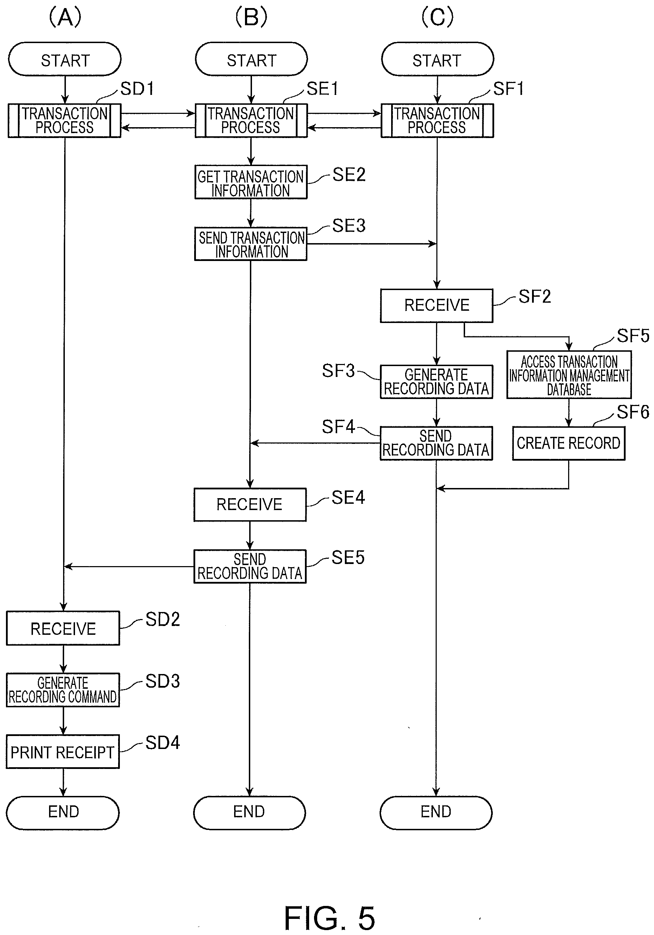

FIG. 5 is a flow chart showing the operation of devices in the transaction processing system 1 during a transaction. Column (A) shows the operation of the recording device 12, (B) shows the operation of the tablet terminal 13, and (C) shows the operation of the control server 15.

As shown in FIG. 5 (A), (B), and (C), the recording device 12, tablet terminal 13, and control server 15 execute a transaction process in response to a transaction starting (step SD1, step SE1, and step SF1).

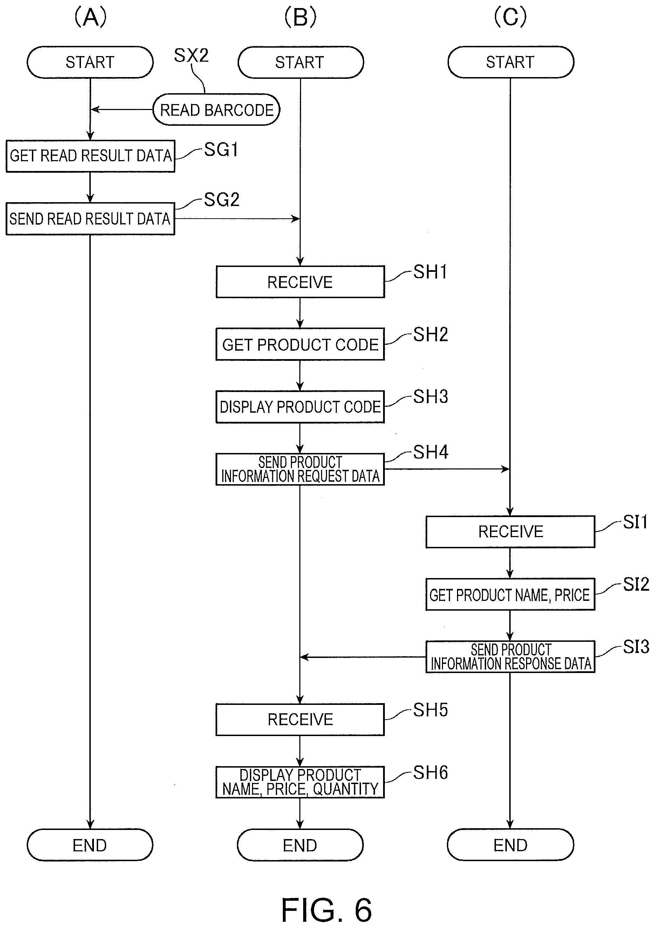

FIG. 6 is a flow chart showing part of the processes executed by the recording device 12, tablet terminal 13, and control server 15 in the transaction process. Column (A) shows the operation of the recording device 12, (B) shows the operation of the tablet terminal 13, and (C) shows the operation of the control server 15.

In the transaction process, the checkout clerk reads the barcode on the product or the packaging of the product being purchased by the customer with the barcode scanner BS2 (step SX2). Upon reading a barcode, the barcode scanner BS2 sends data based on the read result (referred to below as the "read result data") through the port to which the barcode scanner BS2 is connected to the recording device-side device communication unit 24 of the recording device 12. The recording device-side device communication unit 24 then outputs the read result data to the recording device controller 20.

The read result data is data including information indicating the product code of the product.

As shown in FIG. 6 (A), the recording device controller 20 of the recording device 12 acquires the read result data based on the input from the recording device-side device communication unit 24 (step SG1).

Next, the recording device controller 20 controls the recording device communication unit 23 to send the acquired read result data to the tablet terminal 13 (step SG2).

As shown in FIG. 6 (B), the terminal-side browser execution unit 301 of the terminal controller 30 of the tablet terminal 13 controls the terminal communication unit 31 to receive the read result data (step SH1).

Next, based on the read result data, the terminal-side browser execution unit 301 acquires the product code (step SH2).

Next, the terminal-side browser execution unit 301 displays the product code acquired in step SH2 in the barcode information display area 63 of the user interface for processing transactions 60 (step SH3).

Next, the terminal-side browser execution unit 301 controls the terminal communication unit 31 to send data (referredtobelowasproduct information request data) querying the product name and product price of the product identified by the product code acquired in step SH2 to the control server 15 (step SH4).

Note that the terminal-side browser execution unit 301 manages the information required to communicate with the control server 15, such as the address of the control server 15 and the corresponding protocol, opens a connection with the control server 15 based on the managed information, and communicates data through the opened connection.

As shown in FIG. 6 (C), the server-side application execution unit 401 of the server controller 40 of the control server 15 controls the server communication unit 42 to receive the product information request data (step SI1).

Next, based on the received product information request data, the server-side application execution unit 401 acquires the product code, references the product master database stored by the server storage unit 41, and acquires the name and the price of the product identified by the acquired product code (step SI2).

Next, the server-side application execution unit 401 controls the server communication unit 42, and sends product information response data expressing the product name and price information acquired in step SI2 to the tablet terminal 13 (step SI3).

As shown in FIG. 6 (B), the terminal-side browser execution unit 301 of the terminal controller 30 of the tablet terminal 13 controls the terminal communication unit 31 to receive the product information response data (step SH5).

Next, the terminal-side browser execution unit 301 acquires the product name and product price information based on the receivedproduct information response data, and displays the name, price, and quantity of the product in the corresponding fields of the list display area 61 in the user interface for processing transactions 60 (step SH6).

As described above, during a transaction, the barcode of each product being purchased by the customer is read by the checkout clerk with the barcode scanner BS2, and the process shown in FIG. 6 is executed by the devices as the barcodes are read.

When reading the barcode from every product and processing by each device based on the read barcode is completed, the name, price, and quantity of each product being purchased by the customer is displayed in the list display area 61.

When the barcode of every product has been read, the checkout clerk uses the virtual keypad 64 to confirm the transaction total, receives payment from the customer, and makes change as due. The terminal-side browser execution unit 301 of the terminal controller 30 of the tablet terminal 13 then appropriately displays the total of the products purchased by the customer, the amount received from the customer for the transaction, and the change due to the customer in the amount display area 62 of the user interface for processing transactions 60. The terminal-side browser execution unit 301 also cooperates with the recording device controller 20 of the recording device 12 as needed to control the customer display CD2 and cash drawer KS2.

When change has been given to the customer, the checkout clerk operates the Enter key 641 of the virtual keypad 64 of the user interface for processing transactions 60. The transaction process ends when the checkout clerk operates the Enter key 641.

As shown in FIG. 5 (B), when the transaction process ends, terminal-side browser execution unit 301 of the terminal controller 30 of the tablet terminal 13 acquires the transaction information (step SE2).

The transaction information is information including: information denoting the combination of product code, name, price, and quantity for each product purchased by the customer (referred to below as the purchased product information) ; information denoting the total purchase amount, cash amount received from the customer, and change returned to the customer (referred to below as transaction amount information); information denoting the time of the transaction (referred to below as the transaction time information) ; and the store ID, which is identification information for the store (business) where the transaction was completed.

Note that during a transaction, the terminal-side browser execution unit 301 stores information contained in the purchased product information and information contained in the transaction amount information to specific storage areas. In step SE2, the terminal-side browser execution unit 301 acquires purchased product information and transaction amount information based on the information stored to the specific storage areas.

The time that the transaction was performed as indicated by the transaction time information is the time when the Enter key 641 was operated. The time that the transaction was performed as indicated by the transaction time information is not limited to the time that the Enter key 641 was operated, and may be any time derived from the transaction, such as the time when the barcode for the first product was read in the transaction.

After acquiring the transaction information, the terminal-side browser execution unit 301 controls the terminal communication unit 31 to send transaction information data indicating the acquired transaction information to the control server 15 (step SE3).

As shown in FIG. 5 (C), the server-side application execution unit 401 of the server controller 40 of the control server 15 controls the server communication unit 42 to receive the transaction information data (step SF2).

Next, the server-side application execution unit 401 generates recording data instructing producing a receipt in a specific layout based on the transaction information indicated by the received transaction information data (step SF3).

The recording data is control data specifying producing a receipt according to a specific layout, and including in this example a top logo, bottom logo, the time of the transaction, the name, price, quantity and total amount of the products purchased by the customer, the amount received from the customer, and the amount of change returned to the customer. The recording data in this embodiment is an XML document of information written in a specific XML format.

Next, the server-side application execution unit 401 controls the server communication unit 42 to send the generated recording data to the tablet terminal 13 (step SF4).

As shown in FIG. 5 (B), the terminal-side browser execution unit 301 of the terminal controller 30 of the tablet terminal 13 controls the terminal communication unit 31 to receive the recording data (step SE4).

Next, the terminal-side browser execution unit 301 controls the terminal communication unit 31 to send the received recording data to the recording device 12 (step SE5).

As shown in FIG. 5 (A), the recording device controller 20 of the recording device 12 controls the recording device communication unit 23 to receive the recording data (step SD2).

Next, the recording device controller 20 generates recording commands in the command language of the recording device recording unit 21 based on the recording data in the XML document (step SD3).

Next, the recording device controller 20 controls the recording device recording unit 21 based on the generated recording commands to produce a receipt (step SD4).

The receipt produced in step SD4 is then given by the checkout clerk to the customer.

As shown in FIG. 5 (C), after the transaction information data is received in step SF2, the server-side application execution unit 401 of the server controller 40 of the control server 15 accesses the transaction information management database DB1 stored by the server storage unit 41 (step SF5).

Each record in the transaction information management database DB1 relationally stores the purchased product information, transaction amount information, transaction time information, and store ID.

Next, based on the transaction information data received in step SF2, a record relating the purchased product information, transaction amount information, transaction time information, and store ID is created in the transaction information management database DB1 (step SF6).

The control server 15 thus cumulatively stores transaction information appropriate to the transactions. As a result, sales by store and sales by individual product in each store, for example, can be managed.

In the flow charts shown in FIG. 5 and FIG. 6, the control server 15 functions as a server to the tablet terminal 13 as a client in the transaction-related process, and the tablet terminal 13 and control server 15 together execute transaction processes. However, when the tablet terminal 13 acquires the HTML file from the recording control device 16, the recording control device 16 functions as a server to the tablet terminal 13 as a client in the transaction-related process, and the tablet terminal 13 and recording control device 16 together execute transaction processes. More specifically, in relation to the tablet terminal 13, the recording control device 16 executes the processes in FIG. 5 (C) and FIG. 6 (C) . In steps SF5, SF6 in FIG. 5, the recording control device 16 cumulatively stores the received transaction information as the transaction. When able to communicate with the control server 15, the recording control device 16 sends the stored transaction information to the control server 15. Based on the received transaction information, the control server 15 updates the transaction information management database DB1.

The processes executed by devices in a transaction at a checkout counter L where a satellite POS terminal SP is installed are described in FIG. 5 and FIG. 6.

When the transaction is performed at a checkout counter L where a main POS terminal MP is installed, the recording control device 16 alone executes the processes of the tablet terminal 13 and recording device 12 described in FIG. 5 and FIG. 6. More specifically, the control device-side browser execution unit 501 of the control device controller 50 of the recording control device 16 works with the control server 15 to execute the transaction process based on the read result of the barcode scanner BS1 connected to the recording control device 16. The control device-side browser execution unit 501 acquires and sends the transaction information to the control server 15. The control device-side browser execution unit 501 receives the recording data from the control server 15, generates recording commands based on the received recording data, and produces a receipt.

As described above, the tablet terminal 13 (terminal device) in this embodiment of the invention accesses the recording control device 16 (control device) through the local area network LN when the browser boots up. In response to access from the tablet terminal 13, the recording control device 16 determines if communication with the control server 15 (server) through the global network GN is possible, instructs the tablet terminal 13 to connect to the control server 15 if communication with the control server 15 is possible, and instructs the tablet terminal 13 to connect to the recording control device 16 if communication with the control server 15 is not possible. If instructed by the recording control device 16 to connect to the control server 15, the tablet terminal 13 connects to the control server 15 and controls the recording device 12 by a specific web application (first application) that runs on the control server 15; and if instructed by the recording control device 16 to connect to the recording control device 16, the tablet terminal 13 connects to the recording control device 16 and controls the recording device 12 by a specific web application (second application) that runs on the recording control device 16.

Thus comprised, when communication between the tablet terminal 13 and control server 15 is possible, processes can be executed with great processing efficiency by the tablet terminal 13 and the control server 15 without increasing the processor load on the recording control device 16. When the tablet terminal 13 and control server 15 cannot communicate with each other, the processor load on the recording control device 16 increases but interruption of business operations in the store can be prevented by the tablet terminal 13 and recording control device 16 working together to execute the processes. More specifically, a process for handling situations when the tablet terminal 13 and control server 15 cannot communicate with each other through the global network GN can be executed.

When the browser starts in this embodiment of the invention, the tablet terminal 13 accesses the recording control device 16 through a local area network LN.

Because the tablet terminal 13 thus automatically accesses the recording control device 16 when the browser starts, user tasks are reduced and user convenience is improved.

The recording control device 16 in this embodiment of the invention is a device with the ability to record on a recording medium.

Thus comprised, a more cost-effective recording control device 16 with functionality for producing receipts may be connected to the local area network LN instead of connecting a dedicated server device to the local area network LN as a substitute for the control server 15.

In this embodiment of the invention the tablet terminal 13 executes a transaction process through an application that runs on the control server 15 or an application that runs on the recording control device 16, and based on the transaction process controls the recording device 12 to produce a receipt recorded with transaction-related information.

Thus comprised, a system (POS system) that produces receipts with a tablet terminal 13 and recording device 12 can execute a process appropriate to the tablet terminal 13 and control server 15 being unable to communicate with each other through the global network GN.

The invention is described above with reference to a preferred embodiment thereof, but the invention is not limited thereto and can be modified and adapted in many ways without departing from the scope of the accompanying claims.

The control server 15 is configured to generate recording data in the embodiment described above. However, configurations in which the terminal-side browser execution unit 301 of the terminal controller 30 of the tablet terminal 13, or the control device-side browser execution unit 501 of the control device controller 50 of the recording control device 16, generates the recording data are also conceivable.

In the embodiment described above the tablet terminal 13 is configured to access the recording control device 16 when the browser starts. However, a configuration in which the browser starts and accesses the recording control device 16 automatically when the tablet terminal 13 starts is also conceivable. This configuration further reduces user tasks and improves user convenience.

The function blocks described above can also be desirably embodied by combinations of hardware and software, and do not suggest a specific hardware configuration.

### [Industrial Applicability]

As described above, the present invention is useful in a network system in which a terminal device and a server communicate through a global network, and is particularly suited to executing an appropriate process when the devices cannot communicate through the global network.

### [Reference Signs List]

- 1: transaction system (network system)
- 12: recording device
- 13: tablet terminal (terminal device)
- 16: recording control device (control device)
- 15: control server (server)
- GN: global network
- LN: local area network

## Claims

1. A network system comprising:
a server configured to connect to a global network;
a terminal device configured to communicate with the server through the global network, and control a recording device that records on recording media; and
a control device configured to communicate with the terminal device through a local area network, and communicate with the server through the global network;
the terminal device accessing the control device through the local area network;
the control device determining in response to access from the terminal device if the control device can communicate with the server through the global network, instructing the terminal device to connect to the server if the control device can communicate with the server, and instructing the terminal device to connect to the control device if the control device cannot communicate with the server; and
the terminal device connecting to the server and controlling the recording device by a first application that runs on the server if instructed by the control device to connect to the server, and connecting to the control device and controlling the recording device by a second application that runs on the control device if instructed by the control device to connect to the control device.

2. The network system described in claim 1, wherein the terminal device accesses the control device through the local area network when the terminal device starts.

3. The network system described in claim 1 or 2, wherein the control device is a device with functionality to record on a recording medium.

4. The network system described in claim 1, wherein the terminal device executes a transaction process by the first application or the second application, and controls the recording device based on the transaction process to produce a receipt on which transaction-related information is recorded.

5. A communication method comprising:
a terminal device accessing upon startup a control device through a local area network;
the control device determining in response to access from the terminal device if the control device can communicate with a server through a global network, instructing the terminal device to connect to the server if the control device can communicate with the server, and instructing the terminal device to connect to the control device if the control device cannot communicate with the server; and
the terminal device connecting to the server and controlling a recording device by a first application that runs on the server if instructed by the control device to connect to the server, and connecting to the control device and controlling the recording device by a second application that runs on the control device if instructed by the control device to connect to the control device.

6. The communication method described in claim 5, wherein the terminal device accesses the control device through the local area network when the terminal device starts.

7. The communication method described in claim 5 or 6, wherein the control device is a device with functionality to record on a recording medium.

8. The communication method described in claim 5, wherein the terminal device executes a transaction process by the first application or the second application, and controls the recording device based on the transaction process to produce a receipt on which transaction-related information is recorded.
